# EUROPEAN PATENT APPLICATION

(11) **EP 1 783 850 A1**
(43) Date of publication of application: **09.05.2007**
(21) Application number: 06017439.8
(22) Date of filing: 22.08.2006
(51) Int. Cl.: H01M 8/04

(54) **Fuel cell capable of load-dependent operation**

(30) Priority: 25.08.2005 KR 20050078483
(71) Applicant: LG Electronics Inc., Yongdungpo-gu Seoul (KR)
(72) Inventor: Ko, Seung-Tae, Geumcheon-Gu, Seoul (KR); Park, Myung-Seok, Gwangmyeong, Gyeonggi-Do (KR)
(74) Representative: TER MEER - STEINMEISTER & PARTNER GbR

(57) **Abstract**

A fuel cell capable of load-dependent operation is constructed such that the amount of electric power required in the fuel cell, as well as the amount of electric power supplied from a utility power source, of the amount of electric power required in a load, is precisely calculated and the driving of the fuel cell is controlled according to the amount of electric power required in the fuel cell, so that an unnecessary amount of fuel consumed in the production of electric power, thereby optimizing the operation system of the fuel cell and increasing the efficiency thereof.

## Description

### BACKGROUND OF THE INVENTION

### 1. Field of the Invention

The present invention relates to a fuel cell, and more particularly to, a fuel cell capable of load-dependent operation which can maximize efficiency by adjusting the electricity produced by a fuel cell.

### 2. Description of the Related Art

In general, a fuel cell is a device for directly transforming energy of a fuel into electric energy. Such a fuel cell is a fuel cell system in which an anode and a cathode are installed on both sides of a polymer electrolyte film, and which generates electrical energy by the movement of electrons created when electrochemical oxidation of oxygen serving as a fuel occurs at the cathode (oxidized electrode or fuel electrode) and electrochemical reduction of oxygen serving as an oxidizer occurs at the cathode (reduced electrode or air electrode), which may be referred to as a kind of power generation plant.

The aforementioned fuel cell is classified into an alkaline fuel cell (AFC), a phosphoric acid fuel cell (PAFC), a molten carbonate fuel cell (MCFC), a solid electrolyte fuel cell (SOFC), a polymer electrolyte fuel cell (PEMFC), and so forth, depending on operating temperature and the type of main fuels. Among them, the electrolyte of the polymer electrolyte fuel cell is not liquid but a solid polymer membrane, which is distinguished from other fuel cell types. In the polymer electrolyte fuel cell, fuels can be used typically in such a manner that a hydrocarbon (CH) fuel, such as LNG, LPG, etc, is refined into hydrogen (H₂) through desulfurization, reforming reaction, and hydrogen refining process at a reforming unit, and the refined hydrogen is supplied to the fuel electrode of a stack unit.

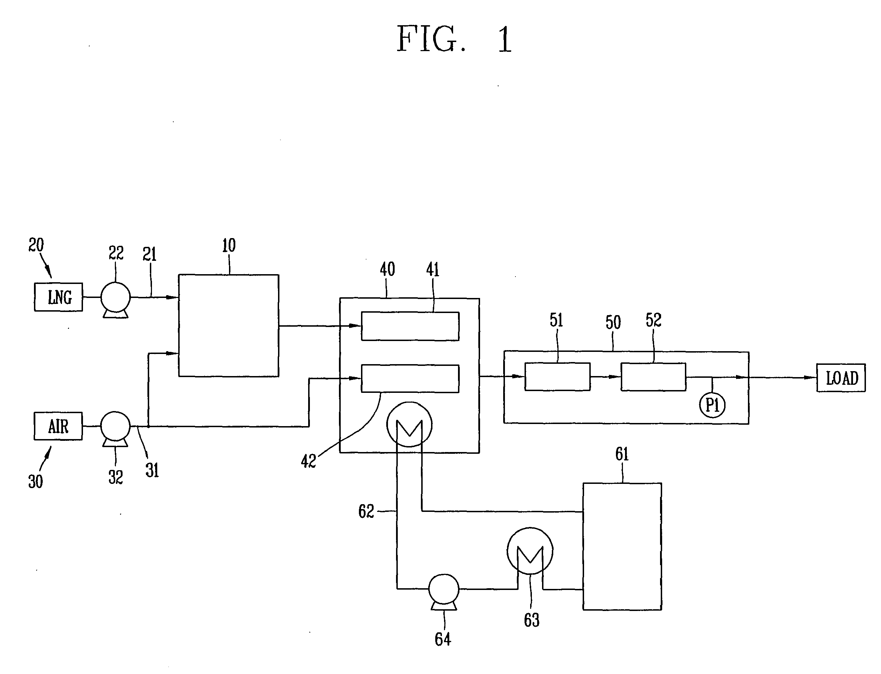

FIG. 1 is a systematic view of a PEMFC (Proton Exchange fuel cell) type fuel cell in which a hydrocarbon (CH) fuel, CH₃OH, etc ("LPG" in the drawing), is refined into hydrogen (H₂) through desulfurization, reforming reaction, and hydrogen refining process at a reformer and used as a fuel.

As shown therein, the prior art fuel cell includes a reforming unit 10 refining hydrogen from LNG, a stack unit 20 provided with a fuel electrode 21 connected to the reforming unit 10 to receive refined hydrogen and an air electrode 22 to receive oxygen in the air, for producing electricity and heat by an electrochemical reaction between hydrogen and oxygen, an electricity conversion unit 30 connected to the output side of the stack unit 40, for converting electricity and supplying the same to a load, a heat exchange unit 60 supplying water to the reforming unit 10 and the stack unit 40 and cooling the reforming unit 10 and the stack unit 20, and a control unit (not shown) electrically connected to the above-described units 10, 20, 30 and 40, for controlling the same.

The electricity conversion unit 50 includes a DC-DC converter 51 which switches a DC created in the stack unit to produce an AC and rectifies the AC to produce a DC again, and an inverter 52 which converts a DC into an AC to supply the same to an electrical appliance for AC power use.

Unexplained reference numeral 20 denotes a fuel supply unit, 21 denotes a fuel supply line, 22 denotes a fuel supply pump, 30 denotes a air supply unit, 31 denotes an air supply line, 61 denotes a storage tank, 62 denotes a water circulation line, 63 denotes a radiator, and 64 denotes a water circulation pump.

The above-described prior art fuel cell operates as follows.

That is, a hydrocarbon fuel is reformed at the reforming unit 10 and refined into hydrogen, and the hydrogen is supplied to the fuel electrode 41 of the stack unit 40 while air is supplied to the air electrode 42 of the stack unit 40, thereby causing an oxidation reaction at the fuel electrode 41 and a reduction reaction at the air electrode 42. Electrons created in this process generate electricity while moving from the fuel electrode 41 to the air electrode 42, and the DC in the electricity is switched in the DC-DC converter 51 of an electricity output unit 50 to produce an AC, the AC is stepped up or down by a coil, a transformer, a capacitance, etc. and then rectified to produce a DC again, and thereafter the inverter 52 converts the DC into the AC again and supplies it to various kinds of AC power loads.

Here, if the overall load is greater than the amount of electricity created in the fuel cell, the amount of electricity required for the overall load is supplemented by using a utility power source.

However, in the above-described prior art fuel cell, in a case where a fuel cell is used as a power source in homes or buildings, a load in actual use varies every hour, and this may lead to overproduction or underproduction. For instance, part of electronic appliances used in homes is for temporary use, and the amount of electricity used increases when such electronic appliances are in use, while the amount of electricity used decreases when they are not in use. In this case, particularly, in the countries or regions where the sale of electricity is not permitted, if the amount of electricity produced in a fuel cell is not increased or decreased depending on a change in the overall load, this results in the production of unnecessary electricity or it becomes necessary to prepare a fuel cell having an overcapacity in consideration of such a change, thereby incurring unnecessary costs.

### BRIEF DESCRIPTION OF THE INVENTION

Therefore, the present invention has been made in consideration of the above problems of the prior art fuel cell, and has as its object to provide a fuel cell capable of load-dependent operation which can adjust an electricity output depending on the variation of a load in actual use.

To achieve these and other advantages and in accordance with the purpose of the present invention, as embodied and broadly described herein, there is provided a fuel cell, including: a fuel supply unit; an air supply unit; a stack unit connected to the fuel supply unit via a fuel supply line to receive hydrogen and connected to the air supply unit via an air supply line to receive oxygen, thereby creating an electrical energy and a thermal energy by an electrochemical reaction between hydrogen and oxygen; an electricity conversion unit for converting the electrical energy created in the stack unit so as to be supplied to a load; an electric power metering unit for detecting both a residual amount of electric power left after the electricity conversion unit supplies electricity to a load and a supplementary amount of electric power supplied through a utility power source; and a control unit electrically connected to the electric power metering unit, and calculating the difference between the residual amount of electric power and supplementary amount of electric power detected by the electric power metering unit to control the electricity output of the stack unit.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a systematic view of one example of a prior art fuel cell;
FIG. 2 is a systematic view of one example of a fuel cell according to the present invention; and
FIG. 3 is a sequential view showing a load-dependent control procedure in the fuel cell of the present invention.

### DETAILED DESCRIPTION OF THE INVENTION

Hereinafter, a fuel cell capable of load-dependent operation according to the present invention will be described with reference to one embodiment which is illustrated in the accompanying drawings.

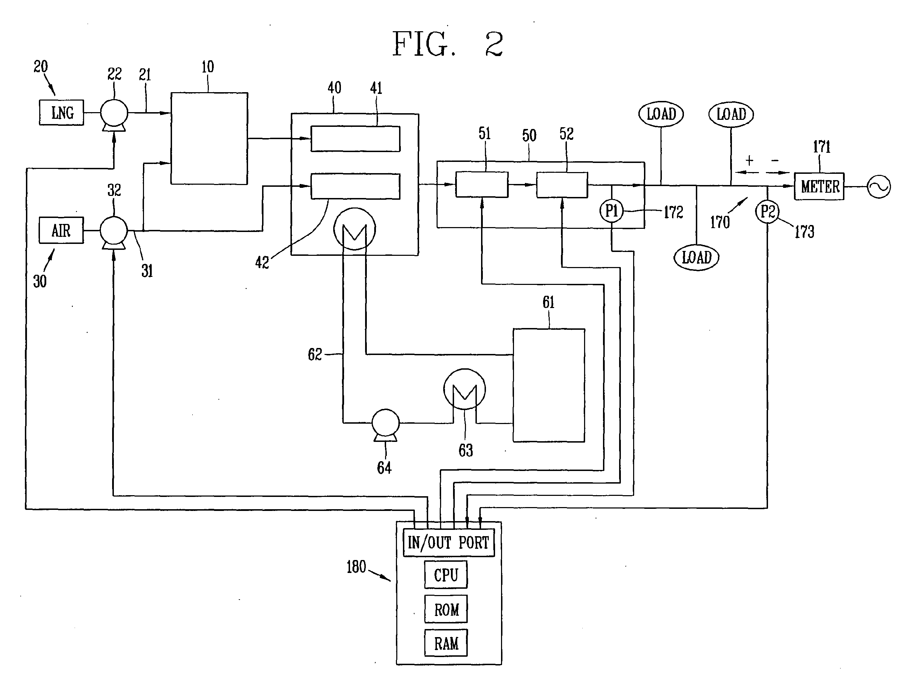

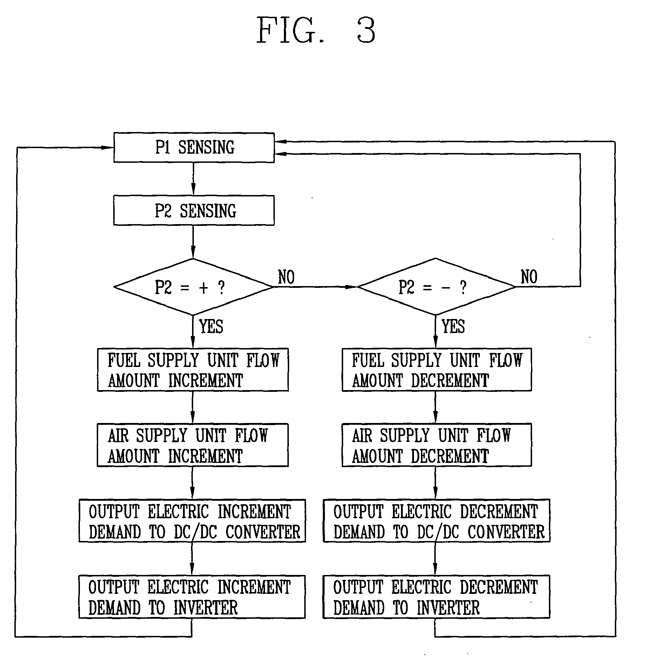

FIG. 2 is a systematic view of one example of a fuel cell according to the present invention. FIG. 3 is a sequential view showing a load-dependent control procedure in the fuel cell of the present invention.

As shown therein, the fuel cell according to the present invention includes a reforming unit 110 refining hydrogen from LNG, a fuel supply unit 120 connected to the reforming unit 110 and supplying refined hydrogen to a fuel electrode to be described later, an air supply unit 130 supplying air in the atmosphere to an air electrode to be described later, a stack unit 140 provided with a fuel electrode 141 to receive hydrogen and an air electrode 142 to receive oxygen from the air, for producing electricity and heat by an electrochemical reaction between hydrogen and oxygen, an electricity conversion unit 150 connected to the output side of the stack unit 140, for supplying electricity to a load, a heat exchange unit 160 supplying water to the reforming unit 110 and the stack unit 140 and cooling the reforming unit 110 and the stack unit 140, an electric power metering unit 170 detecting both a residual amount of electric power left after the electricity conversion unit 150 supplies electricity to a load and a supplementary amount of electric power supplied through a utility power source, and a control unit 180 calculating the difference between the residual amount of electric power and supplementary amount of electric power detected by the electric power metering unit 170 to control the electricity output of the stack unit 140.

The fuel supply unit 120 and the air supply unit 130 have a fuel supply line 121 and an air supply line 131, respectively, that are connected to the fuel electrode and air electrode 142 of the stack unit 140. A fuel supply pump 122 and an air supply pump 132 are provided, respectively, at middle portions of the fuel supply line 121 and air supply line 131, so as to adjust the supply amount of a fuel and the supply amount of air. Here, the fuel supply pump 122 may be installed at a forward flow side of the reforming unit 110 or at a backward flow side of the reforming unit 110.

The stack unit 140 has the fuel electrode 141 and the air electrode 142 arranged with an electrolyte film interposed there between, and a separator plate (not shown) with a fuel flow path and an air flow path is installed on the outer surface of the fuel electrode 141 and air electrode 142 to form unit cells. The unit cells are stacked in layers to comprise the stack unit 140.

The electricity conversion unit 150 includes a DC-DC converter 151 which switches a DC created in the stack unit 140 to produce an AC and rectifies the AC to produce a DC again, and an inverter 152 which converts a DC into an AC to supply the same to an electrical appliance for AC power use.

The electric power metering unit 170 includes a meter 171 installed between the electricity conversion unit 150 of the fuel cell and the utility power source, for detecting an amount of electric power used of various kinds of loads, a first electric power sensor 172 installed at the output terminal of the electricity conversion unit 150, for detecting an amount of electric power produced through the electricity conversion unit 150 and transmitting a signal to the control unit 180, and a second electric power sensor 173 installed between the meter 171 and the load, for detecting a residual amount of electric power left after supplied to various kinds of loads through the fuel cell and a supplementary amount of electric power supplied to various kinds of loads from the utility power source.

The first electric power sensor 172 and the second electric power sensor 173 may be comprised of a current sensor for sensing current, or a hybrid sensor for sensing both current and voltage.

The control unit 180 is electrically connected to the fuel supply pump 121 and the air supply pump 131 so that the amount of fuel and air supply can be adjusted depending on the difference between the residual amount of electric power and the supplementary amount of electric power. Data can be exchanged by directly reading the first electric power sensor 172, or by using a communication protocol.

Unexplained reference numeral 161 denotes a storage tank, 162 denotes a water circulation line, 163 denotes a radiator, and 164 denotes a water circulation pump.

In the drawings, like reference numerals have been used throughout to designate identical elements.

The operational effects of a fuel cell capable of load-dependent operation are as follows.

That is, if the stack unit 140 reacts by a command from the control unit 180, the stack unit 140 generates electricity and heat, and the electricity is utilized as electrical energy required at homes or offices through the electricity conversion unit 150, while the heat is utilized as heat energy in conjunction with a room heating or hot water system.

At this time, part of electrical appliances connected to the fuel cell for receiving electricity is for temporary use. Thus, the amount of electric power required in the overall load may be greater or less than the amount of electric power produced in the fuel cell according to the user's frequency of use. Accordingly, in the present invention, the control unit 180 of the fuel cell continuously manages the electricity output and the use amount of electric power, and always allows an appropriate amount of electricity to be produced in the fuel cell.

For instance, as shown in FIGS. 2 and 3, the first electric power sensor 172 detects an amount of electric power produced in the fuel cell, the second electric power sensor 173 detects a residual amount of electric power left after supplied to the overall load or a supplementary amount of electric power supplied to the load from a utility power source because the amount of electric power produced through the fuel cell does not cover the overall load, and the control unit 180 compares a current amount of electric power production detected from the first electric power sensor 172 with the values detected from the second electric power sensor 173 to calculate an appropriate amount of electricity to be produced in the fuel cell, adjusts the opening and closing amount of the fuel supply pump 122 and air supply pump 132 so as to increase or decrease the amount of fuel and air supply as much as an increment or decrement thereof. Also, the DC-DC converter 151 and inverter 152 of the electricity conversion unit 150 are commanded to increase or decrease the output amount of electric power, thereby always allowing the fuel cell to produce an appropriate amount of electricity.

Subsequently, the fuel cell produces as much an amount of electric power as a load actually requires, so that an unnecessary amount of fuel consumed in the production of electric power, thereby optimizing the operation system of the fuel cell and increasing the efficiency thereof.

## Claims

1. A fuel cell, comprising:
a fuel supply unit;
an air supply unit;
a stack unit connected to the fuel supply unit via a fuel supply line to receive hydrogen and connected to the air supply unit via an air supply line to receive oxygen, thereby creating an electrical energy and a thermal energy by an electrochemical reaction between hydrogen and oxygen;
an electricity conversion unit for converting the electrical energy created in the stack unit so as to be supplied to a load;
an electric power metering unit for detecting both a residual amount of electric power left after the electricity conversion unit supplies electricity to a load and a supplementary amount of electric power supplied through a utility power source; and
a control unit electrically connected to the electric power metering unit, and calculating the difference between the residual amount of electric power and supplementary amount of electric power detected by the electric power metering unit to control the electricity output of the stack unit.

2. The fuel cell of claim 1, wherein the electric power metering unit includes:
a meter for detecting an amount of electric power used of various kinds of loads;
a first electric power sensor for detecting an amount of electric power produced in the stack unit; and
a second electric power sensor for detecting a residual amount of electric power left after supplied to various kinds of loads through the fuel cell and a supplementary amount of electric power supplied to various kinds of loads from the utility power source.

3. The fuel cell of claim 2, wherein the meter is installed between the output terminal of the stack unit and the utility power source.

4. The fuel cell of claim 2, wherein the first electric power sensor is installed between the stack unit and the load.

5. The fuel cell of claim 2, wherein the second electric power sensor is installed between the meter and the load.

6. The fuel cell of claim 2, wherein the first electric power sensor and the second electric power sensor are comprised of a current sensor for sensing current.

7. The fuel cell of claim 2, wherein the first electric power sensor and the second electric power sensor are comprised of a hybrid sensor for sensing both current and voltage.

8. The fuel cell of claim 1, wherein the fuel supply unit and the air supply unit have a fuel supply pump and an air supply pump electrically connected to the control unit to enable a load-dependent operation, the fuel supply pump and the air supply pump being installed at middle portions of the fuel supply line and air supply line so as to adjust the amount of fuel and air supply according to the difference between the residual amount of electric power and the supplementary amount of electric power.
